# EUROPEAN PATENT APPLICATION

(11) **EP 2 214 394 A1**
(43) Date of publication of application: **04.08.2010**
(21) Application number: 09305081.3
(22) Date of filing: 30.01.2009
(51) Int. Cl.: H04M 15/00, H04W 4/24

(54) **Reverse change calling in a communications network**

(71) Applicant: Hewlett-Packard Development Company, L.P., Houston, TX 77070 (US)
(72) Inventor: Band, Richard, 38053 Grenoble Cedex 09 (FR); Giraud, Armand, 38053 Grenoble Cedex 09 (FR); Carrasco, Ivan, 38053 Grenoble Cedex 09 (FR)
(74) Representative: Franks, Adam Peter

(57) **Abstract**

According to one embodiment of the present invention, there is provided apparatus for use in a communication network for performing reverse charge calling. The apparatus comprises a reverse charging element operable for: receiving a request from a first subscriber to establish a reverse charge call with a second subscriber, the request including an identifier of the first and second subscribers on the network; establishing a call with the second subscriber; sending a call establishment request to a service control element to establish a call with the first subscriber, the request including a predetermined identifier identifiable by the service control element; the service control element being further operable for: detecting the presence of the predetermined identifier in a call establishment request message: informing the second subscriber that a reverse charge call has been requested along with the determined cost of the call; and completing the call with the first subscriber upon obtaining authorization to accept the reverse charge call from the second subscriber.

## Description

### BACKGROUND OF INVENTION

Conventional communication systems, such as mobile telephony systems, employ billing systems through which subscribers or users of the telephony network are billed for their charge-incurring use made of the telephony network. Generally, network operators offer a choice of post-pay or pre-pay billing plans which are provided by an appropriate billing system.

At times subscribers may want to make a charge-incurring use of the telephony network without being charged for that use. For example, a subscriber may wish to make a reverse charge (also known as a collect call) such that the called party pays for the call. Reasons for this are numerous and may include, for example, pre-paid subscribers, such as children, who have insufficient credit to make a call to a parent, or indeed post-paid subscribers who wish to make a free call.

Numerous third party reverse charging services are known, such as the 0800 Reverse service provided by 0800 Reverse Limited in the United Kingdom, and the 1800 Phone Home service provided by the 1800 Freecall Company in Australia. Such services provide a freephone number to which a caller can place a free call to an interactive voice application. The interactive voice application requests the caller to enter the destination telephone number and the interactive voice application places a call to the destination telephone number. If the call is answered, the interactive voice application requests the called party to accept the reverse charge call. If the call is accepted, the interactive voice application bridges the two call legs together and the called party is charged for the call.

Since such services are provided independently from the network operators, the charges applied by such services are generally high, and are typically largely superior to the real cost of the calls. One of the reasons for this is that such third party operators are unable to determine how much any particular subscriber is charged for their calls since call rates are generally determined based on an individual subscription package, and third party operators do not have access to this information.

### BRIEF DESCRIPTION

Embodiments of the invention will now be described, by way of non-limiting example only, with reference to the accompanying drawings, in which:
Figure 1 is a block diagram showing a telecommunications system according to the prior art;
Figure 2 is a block diagram showing a telecommunications system according to an embodiment of the present invention;
Figure 3 is a simplified flow diagram outlining example processing steps taken by various elements of the system 200, according to an embodiment of the invention; and
Figure 4 is a message flow diagram outlining example messages sent between different elements of the system 200 according to an embodiment of the invention.

### DETAILED DESCRIPTION

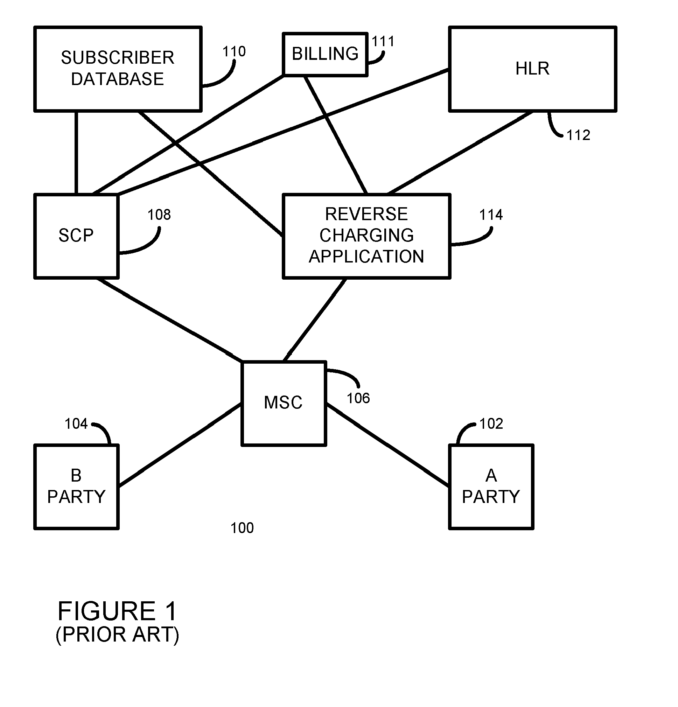

Figure 1 is a simplified block diagram showing a mobile telephony intelligent network (IN) 100 providing a reverse charging system according to the prior art. The system 100 enables the network operator to provide a reverse charge calling feature that charges a user accepting a reverse charged call at substantially the same rate as if he had initiated a conventional call with the other party. This is in contrast to the previously described third party reverse charging services that charges a generally arbitrary premium rate.

Those skilled in the art will appreciate that, for clarity, not all elements of the telephony network are shown.

A user of a mobile station (MS) 102, such as a mobile telephone, wants to place a reverse charge call to a mobile station 104. To initiate the reverse charge call the MS 102 places a call to a predetermined telephone number of a reverse charging application 114 provided by the network operator. The call is initially received by an MSC 106 which connects the call to the reverse charging application 114. Through an interactive voice application the reverse charging application 114 requests the user to enter the destination telephone number of the subscriber they wish to call. The telephone number may be entered, for example, using DTMF tones or through use of spoken digits.

Once the reverse charging application 114 has the destination telephone number it interrogates the subscriber database 110 to determine whether the destination telephone number belongs to a subscriber of the network 100. If it does not, the reverse charging application 114 terminates the call, in an appropriate manner, through the MSC 106.

Although it is generally technically possible to implement reverse charged calling between subscribers of different networks, one of the difficulties in doing so is in obtaining billing and subscription information between different network operators. Accordingly, in practice such services are generally limited between subscribers of the same network.

If the destination telephone number does belong to a subscriber of the network operator the RCA 114 requests, from the HLR 112, the current location details of both MS 102 and MS 104. The location of both mobile stations is important as the cost of the call is based in part on the location, for example whether one or both mobile stations are roaming in a foreign network.

Once the RCA 114 has obtained the location details of the two mobile stations 102 and 104 the RCA 114 obtains, from a subscriber database 110, details of the billing plan associated with the MS 104. The cost of the call will depend on the particular contract or subscription package the subscriber has with the network operator. The cost of the call, or at least an estimated cost, is then calculated by the RCA 114.

The RCA 114 then makes a call to the MS 104 and, when the call is answered, plays an announcement indicating that the user of MS 102 wishes to make a reverse charge call, the cost of accepting the call (if applicable) and the call rate, and requests confirmation that the user of MS 104 is willing to accept the call.

If the user of MS 104 accepts the call, for example by sending an appropriate DTFM tone or voice command, the RCA 114 bridges the call to MS 102 and the call to MS 104 together as a single call. This causes the MSC 106 to trigger the SCP 108. It is important to note, however, that the single bridged call has not yet completed at this point.

When the SCP 108 receives details of the call between the MS 102 and MS 104 it requests, from the HLR 112, details of the location of each MS 102 and 104. The SCP 108 then obtains, from the subscriber database, details of the billing plan associated with the MS 104 to enable the cost of the call to be calculated. If the MS 104 is associated with a pre-paid billing account, the SCP 108 determines, through the billing system 111, whether the associated subscriber account has sufficient credit to enable the call to be completed. If the MS 104 does not have sufficient credit or if the call is otherwise not authorized to proceed, the SCP 108 instructs the MSC 106 to terminate the call between the two mobile stations 102 and 104. Otherwise, the SCP monitors the call in the conventional manner and the cost of the call is applied to the subscriber account associated with MS 104 through the billing system 111, in a conventional manner.

One of the problems with such an arrangement is that a significant amount of the functionality performed in the standard network elements (such as the MSC 106, the SCP 108, the subscriber database 110 and the HLR 112) is duplicated by the RCA 114. For example, in order for the RCA 114 to determine the cost of the call the RCA 114 has to interact with the HLR 112 to obtain the location information and then with the subscriber database 110 to obtain the details of the subscription associated with the user of MS 104. In addition to this, the RCA 114 requires the appropriate interfaces and protocols for interacting with the HLR 112 and the subscriber database 110. Once the RCA 114 connects a reverse charge call, the telephony network also has to determine the cost of the call, based on the location and subscription of the subscriber.

It is important to note that in the system of Figure 1 access to the HLR 112 and subscriber database 110 from the reverse charging application 114 is only possible since the reverse charging application 114 is provided by the operator of the network 100. Typically, third party applications do not have access to such network elements.

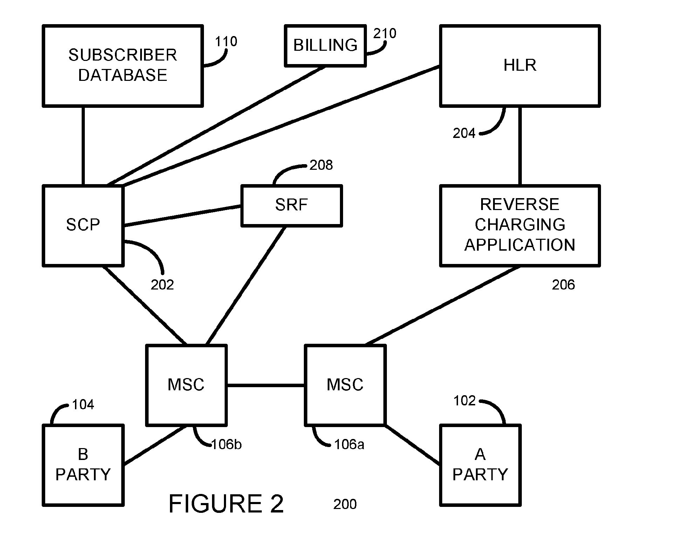

Referring now to Figure 2, there is shown a simplified block diagram of a telephony intelligent network (IN) 200 incorporating a reverse charging service according to an embodiment of the present invention. In Figure 2, common elements with the system of Figure 1 are shown having common identifiers.

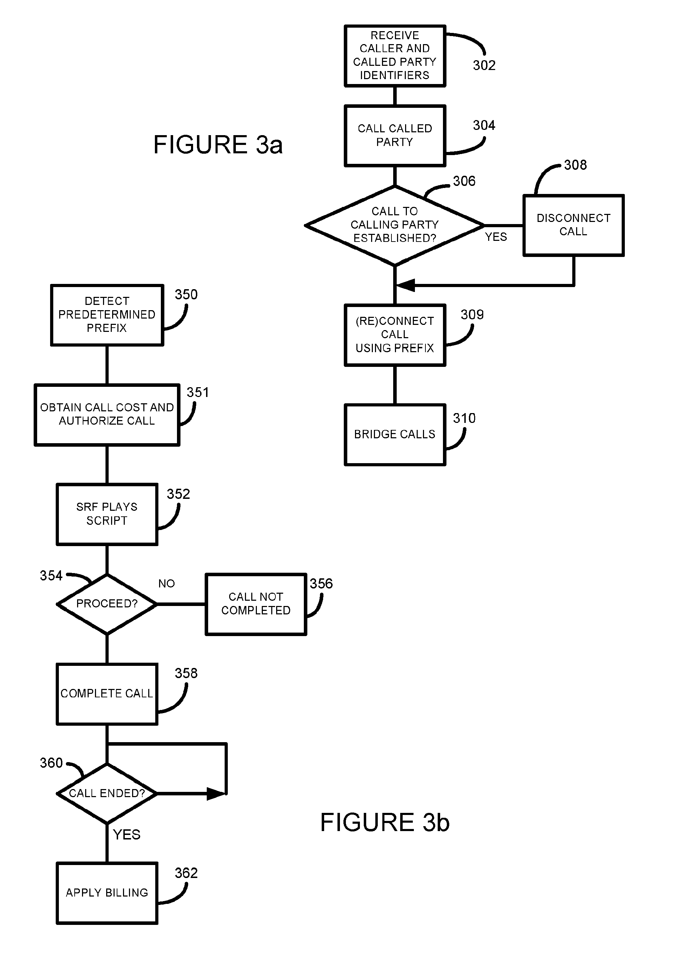

Additional reference is made to Figure 3, which is a simplified flow diagram outlining example processing steps taken by various elements of the system 200, according to one embodiment.

To initiate a reverse charge call the MS 102 places a call, through an MSC 106a, to a predetermined telephone number of a reverse charging application (RCA) 206. In the present embodiment the call placed to the RCA 206 is free of charge to the caller, although in alternative embodiments the calling party may be charged for the call.

In step 302, the RCA 206 receives the MSISDN numbers of the calling party, MS 102, and the intended called party MS 104. The calling party number may be received, for example, using caller line identification and the called party number may be received, for example, by the calling party sending voice commands or DTMF tones.

In an alternative embodiment, the calling party may initiate the reverse charge call through a USSD message containing both the calling party and called party MSISDN numbers, through a web application, via an SMS message, or in any other suitable manner.

At step 304 the RCA 206 establishes a first call leg between the RCA 206 and the called party (MS 104) by sending a call establishment request message to the MSC 106a. When placing the call the RCA 206 includes a first predetermined identifier in the call establishment message sent from the RCA 206. The purpose of the first identifier is to inform the SCP 202 that the call originates from the RCA 206 and to not charge for the call.

At step 306 the RCA determines whether a call leg is already established between itself and the calling party (MS 102). For example, if the calling party initially placed a call to the RCA 206 to initiate a reverse charge call then a call will already be established. However, since this call was originally connected as a free call the call will need to be disconnected by the RCA 206 (step 308) and reconnected (step 309) as a charged call.

If, on the other hand, the calling party initiated a reverse charge call through a USSD message then no call will be currently established (step 306) between the RCA 206 and the MS 102, so the RCA 206 places a call (step 309) to the MS 102.

When the call is connected or reconnected at step 309 a call establishment message is sent including a second predetermined identifier. The purpose of the second predetermined identifier is to indicate to the SCP 202 that the call is a reverse charge call so that the SCP 202 obtains the cost of the call from the billing system 210. The second predetermined identifier also indicates to the SCP 202 that a predetermined script is to be played to the called party MS 102 through the SRF 208.

One advantage of having the SCP 202 obtain the cost of the call directly from the billing system 210 is that the cost or rate of the call obtained is the rate at which the called party would be charged if had have initiated the call to the calling party originally.

When the call is answered by MS 104 the RCA 206 bridges the two call legs together as a single call (step 310). At this point the RCA 206 may play a script, such as an audio announcement, to the MS 104 indicating that a reverse charge call has been received and that the cost of the call is being calculated.

Upon detecting this second predetermined identifier (step 350) the SCP 202 obtains (step 351) the cost of the call from the billing system 210 and obtains authorization from the billing system 210 to continue the call.

The predetermined identifiers may be included in the call establishment message in any suitable manner including, for example, by way as a message prefix or suffix.

The SCP 202 then instructs (step 352) the MSC 106b to establish a temporary connection with the specialized resource function (SRF) 208. The second identifier identifies a predetermined script to be played (step 352) by the SRF to the MS 104 informing the user of MS 104 that MS 102 has requested to place a reverse charged call, the cost of the call, and requesting confirmation that the user of MS 104 is willing to accept the call (step 354). If the call is not accepted the call is not completed (step 356). The script may be any suitable script such as a voice rendered VoiceXML script, a set of one or more audio recordings, or the like.

If the call is accepted (step 354) by the MS 104 the SRF 208 informs the SCP 202 and the SCP 202 instructs the MSC 106b to complete the reverse charged call (step 358). The SCP 202 then monitors the call (step 360) in a conventional manner until the call is terminated. The cost of the call is applied (step 362) to the subscriber of the MS 104 through the billing system 210 in a conventional manner.

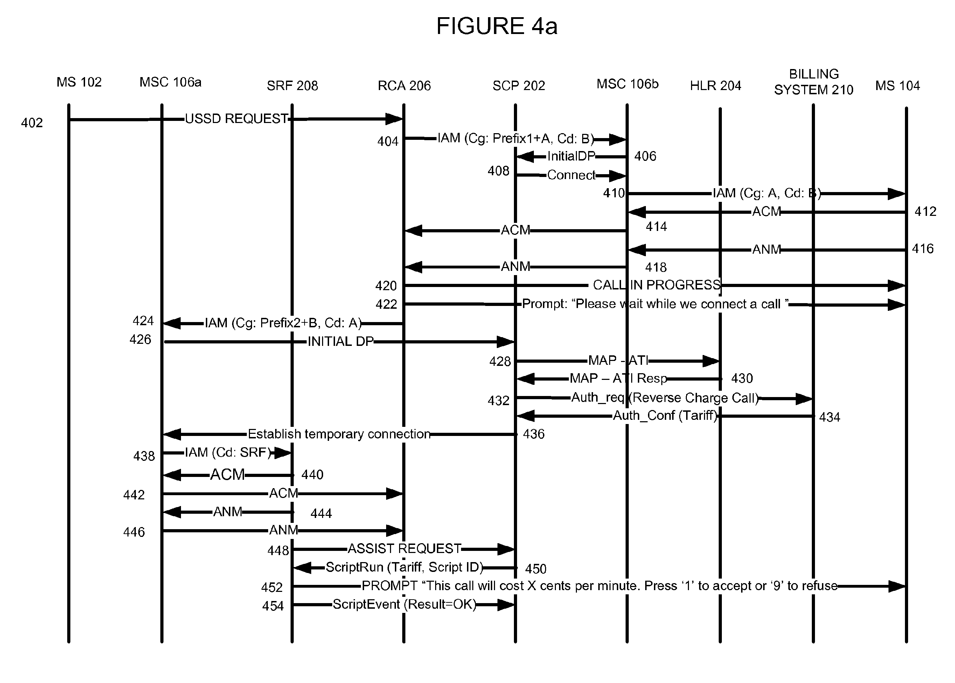

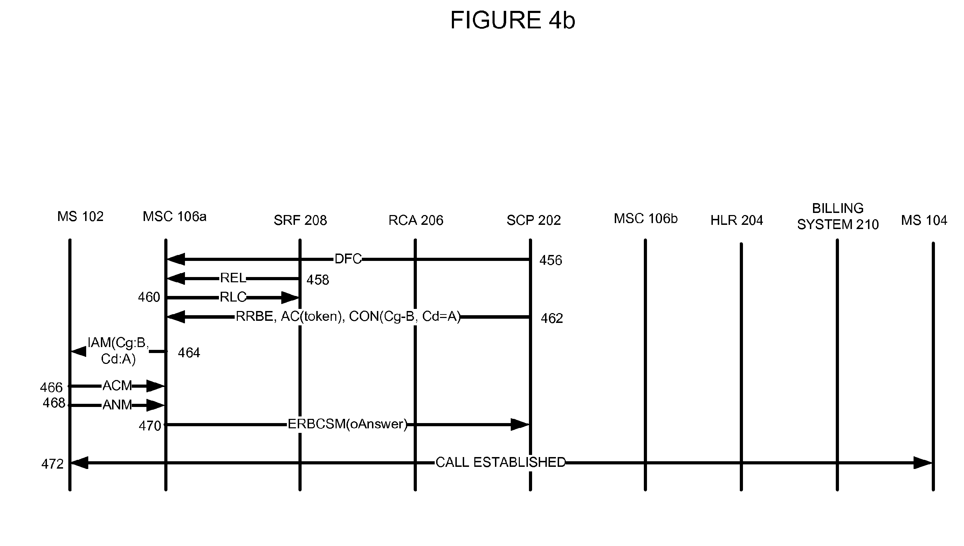

Referring now to Figure 4 is a message flow diagram showing example messages sent between different elements of the system 200 according to an embodiment of the invention.

In this embodiment the user of the MS 102 initiates a reverse charge call by sending a USSD message (402) to the RCA 206. The RCA 206 obtains from the received USSD message 402 the telephone subscriber number (MSISDN) associated with the MS 102 along with the subscriber telephone number (MSISDN) of the desired called party, e.g. MS 104. An example USSD message may be: *0800#12345 where *0800 is the short code for the RCA 206, and where 12345 is the MSIDSN number of the called party MS 104.

In response thereto, the RCA 206 creates, by way of messages 404, 406, 408, 410, 412, 414, 416, and 418, a first call leg to the called party (MS 104).
The RCA 206 places a call (404, 406, 408, 410, 412, 414, 416, 418), using the received called party MSISDN, to MS 104. When initially placing the call, the RCA 206 sends a call establishment message, such as an ISUP Initial Address Message, containing the MSISND of both the calling party and the called party (i.e. the subscriber numbers associated with the MS 102 and the MS 104) and additionally adds a first predefined identifier to the MSISDN number of the calling party. The identifier can be any combination of digits 0 to 9 and letters A to E, such as A0. The purpose of the first identifier is to inform the SCP 202 that the call originates from the RCA 206 and to not charge for the call.

When the MS 104 answers the call (420) the RCA 206 plays (422) a suitable prompt to the MS 104 indicating that a reverse charge call has been received and that the cost of accepting the reverse charge call is being calculated. Any suitable prompt may be given. In further embodiments the prompt may be dispensed with.

The RCA 206 then creates a call leg to the calling party MS 102 by sending an Initial Address Message (IAM) (424) to the MSC 106a through which the MS 102 is connected. The IAM message 424 includes the MSISDN of the called party (MS 104) and of the calling party (Cg:) (MS 102). Additionally, the RCA 206 adds a second predefined identifier, such as A1, to the MSISDN number of the called party (Cd:) (MS 104). The purpose of the second identifier is to inform the SCP 202 that the call is a reverse charge call, to play an appropriate script through the SRF 208, and to charge the call based on the determined location of MS 102 in accordance to the subscription package of the MS 104, for example as determined by the billing system 210.

In response to receiving the IAM message 424, the MSC 106a is triggered to control the call as if it had been placed in a conventional manner, and in response thereto sends an lnitialDP message (426) to the SCP 202. The SCP 202 then performs standard operations (428, 430, 432, 434) to determine the location of the MS 102 and MS 104 (428, 430), and to determine whether the subscriber of MS 102 has sufficient rights to pay for the call (432, 434). The SCP 202 sends a modified *Authentication Request* message to the billing system 210 to have the billing system return the cost of the call in the response message 434.

The SCP 202 may then instruct (436) the MSC 106a to establish a temporary connection (436) with the SRF 208 (438, 440, 442, 444, 446). The SRF 208 requests the SCP 202 to indicate which script to play (448), and the SCP 202 responds with a script identifier and the calculated call cost (450) obtained in the message 434 from the billing system 210. The SRF 208 then plays an appropriate audio script (452) to the MS 104.

If the MS 104 accepts the reverse charge call (454) the SCP 202 is informed by the SRF 208. The SCP 202 then requests the MSC 106b to disconnect the established call leg to the SRF 208 by sending a *DisconnectForwardConnection* message (456). The MSC 106b then releases the call leg (458, 460).

The SCP 202 then redirects the call to the MS 102 (462, 464) and sets up a detection point to start metering the duration of the call. The call is finally forward (464, 466, 468, 470) to MS 102, and the call between MS 102 and 104 is established (472).

In a further embodiment, the operator may add a premium to the call cost or rate, or a one-off connection charge, as appropriate.

One of the main advantages of the above-described embodiments is that much of the duplication of functionality (compared to the system of Figure 1) is removed. This is achieved through the realization that much of the required functionality by a reverse charging application is already performed by existing network equipment, such as the SCPs, MSCs, HLRs, etc. In this way, a reverse charging system according to the present embodiments is both significantly simpler and cheaper to implement than prior solutions.

Those skilled in the art will appreciate that although the above-described embodiments relate primarily to mobile intelligent networks, the present invention is in no way limited thereto. For example, further embodiments may provide reverse charge billing applications in fixed line telephony networks, session initiation protocol (SIP) and IP multimedia subsystem (IMS) networks. Those skilled in the art will also appreciate that the functionality of an SCP may be provided by any suitable service control element, that the functionality of the MSC may be provided by any suitable switching element, that the functionality of the HLR may be provided by any suitable location element, and that the functionality of the SRF may be provided by any suitable media player element. Such functionality may be appropriately provided by way of electronic hardware, or through appropriate computer software or programs running on computer hardware.

Embodiments within the scope of the present invention also include computer-readable media for having computer-executable instructions or data structures stored thereon and also known as computer software. Such computer-readable media can be any suitable media accessible by a general purpose or special purpose computer. Computer-executable instructions may comprise, for example, instructions and data which cause a general purpose computer, special purpose computer, or special purpose processing device to perform a certain function or group of functions.

The software of the present invention can be implemented in several different ways. The implementation of the software is not limiting on the invention. In one embodiment, the software is installed on a computer readable medium as computer readable code which, when executed, carries out the functionality of the present invention as described herein. In another embodiment, the software is pre-loaded and installed as part of an operating system kernel.

## Claims

1. Apparatus for use in a communication network for performing reverse charge calling, comprising:
a reverse charging element operable for:
receiving a request from a first subscriber to establish a reverse charge call with a second subscriber;
establishing a call with the second subscriber;
sending a call establishment request to a service control element to establish a call with the first subscriber, the request including a predetermined identifier identifiable by the service control element;
the service control element being further operable for:
detecting the presence of the predetermined identifier in the call establishment request message:
informing the second subscriber that a reverse charge call has been requested along with the determined cost of the call; and
completing the call with the first subscriber upon obtaining authorization to accept the reverse charge call from the second subscriber.

2. The apparatus of claim 1, further comprising a media player element, the service control element being further operable for, prior to completing the call, instructing the media player element to play a predetermined media script to the second subscriber.

3. The apparatus of claim 1 or 2, further comprising a billing system, wherein the service control element is further operable for, in response to detecting the presence of the predetermined identifier, obtaining the cost of the call from the billing system.

4. The apparatus of claim 1, 2, or 3, wherein the reverse charging element is further operable for establishing a call with the first subscriber and for bridging the call with first subscriber to the call established with the second subscriber.

5. The apparatus of claim 1, 2, or 3, wherein the reverse charging element is operable for, where a call is currently established between the first subscriber and the reverse charging element, disconnecting the call and re-establishing a call with the first subscriber using the first identifier prior to bridging the reestablished call to the call established with the second subscriber.

6. The apparatus of claim 2 to 5, wherein the service control element is operable for instructing a switching element to establish a temporary connection with the media player element, the instruction including an identifier identifying a predetermined script to play and the determined cost of the call, and for causing the media player element to play the script to the second subscriber.

7. A method, in a communication network, of performing reverse charge calling, comprising:
receiving a request from a first subscriber to establish a reverse charge call with a second subscriber;
establishing a call with the second subscriber;
sending a call establishment request to a service control element to establish a call with the first subscriber, the call establishment request including a predetermined identifier;
detecting, at the service control element, the presence of the predetermined identifier in a received call establishment request and in response thereto:
informing the second subscriber that a reverse charge call has been requested along with along with the determined cost of the call; and
completing the call with the first subscriber upon obtaining authorization to accept the reverse charge call from the second subscriber.

8. The method of claim 7, further comprising, prior to completing the call, instructing a media player element to play a predetermined media script to the second subscriber.

9. The method of claim 7 or 8, wherein the communication network further comprising a billing system, the method further comprising, in response to detecting the presence of the predetermined identifier, obtaining the cost or rate of the call from the billing system.

10. The method of claim 7, 8, or 9, further comprising establishing a call with the first subscriber and bridging the call with first subscriber to the call established with the second subscriber.

11. The method of claim 7, 8, or 9, further comprising, prior to establishing the call with the first subscriber, determining whether a call is already established between the first subscriber and the reverse charging element, and where it is so determined, disconnecting the call and re-establishing a call with the first subscriber using the predetermined identifier prior to bridging the reestablished call to the call established with the second subscriber.

12. The method of claim 7, 8, 9, 10 or 11, further comprising instructing a switching element to establish a temporary connection with the media player element, the instruction including an identifier identifying a predetermined script to play and the determined cost of the call, and for playing the script to the second subscriber.

13. A communication network comprising apparatus according to claims 1 to 6.

14. A communication network operable in accordance with the method of claims 7 to 12.
